# EUROPÄISCHE PATENTSCHRIFT

(11) **EP 1 436 180 B1**
(45) Veröffentlichungstag und Bekanntmachung des Hinweises auf die Patenterteilung: **18.01.2006**
(21) Anmeldenummer: 02779470.0
(22) Anmeldetag: 09.10.2002
(51) Int. Cl.: B60T 7/04, G01D 5/245

(54) **BETÄTIGUNGSPEDAL FÜR KRAFTFAHRZEUGE**
ACTUATING PEDAL FOR MOTOR VEHICLES
PEDALE D'ACTIONNEMENT POUR DES VEHICULES AUTOMOBILES

(30) Priorität: 12.10.2001 DE 10150588; 23.08.2002 DE 10238671
(43) Veröffentlichungstag der Anmeldung: 14.07.2004
(73) Patentinhaber: Continental Teves AG & Co. oHG, 60488 Frankfurt am Main (DE)
(72) Erfinder: SCHIEL, Lothar, 65719 Hofheim (DE); SCHIRLING, Andreas, 64319 Pfungstadt (DE); GÖRLACH, Johannes, 35428 Langgöns (DE); LUCIUS, Lars, 64295 Darmstadt (DE)
(86) Internationale Anmeldenummer: PCT/EP2002/011304
(87) Internationale Veröffentlichungsnummer: WO 2003/033320

(56) Entgegenhaltungen:
- WO-A-98/57127
- DE-A- 19 855 358
- US-A- 5 663 557

## Beschreibung

Die vorliegende Erfindung betrifft ein Betätigungspedal für Kraftfahrzeuge, das mittels einer Schwenkachse drehbar gelagert ist und mit einer den Pedalweg aufnehmenden Sensoreinrichtung versehen ist, wobei die Sensoreinrichtung durch einen mit dem Betätigungspedal gekoppelten Encoderteil sowie mindestens zwei mit dem Encoderteil zusammenwirkende, magnetisch empfindliche Aufnehmer gebildet ist.

Ein Betätigungspedal ist z. B. aus der internationalen Patentanmeldung WO 01/40039 A1 bekannt. Bei dem vorbekannten Betätigungspedal ist die Sensoreinrichtung als induktiver Sensor mit einem stationären Spulenteil und einem mit dem Pedal bewegten Metallteil derart ausgebildet, dass durch Änderungen des Abstands zwischen Spulenteil und Metallteil die elektrischen Verhältnisse beeinflusst werden, von denen entsprechende Messwerte abgeleitet werden.

Die Sensoreinrichtung zur Erfassung der Winkelstellung arbeitet bei dem bekannten Pedal auf analogem Messprinzip. Als weniger vorteilhaft anzusehen ist die relativ geringe Auflösung des Sensorsignals. Außerdem ist eine hochpräzise Lagerung des Pedals erforderlich, da sich sonst Ungenauigkeiten der Pedallagerung auf das Messergebnis direkt auswirken bzw. sprunghafte Messwertänderungen auftreten können. Als ein weiterer Nachteil kann die Störanfälligkeit des induktiven Sensors durch metallische Fremdpartikel angesehen werden. Aus den oben genannten Gründen ist das vorbekannte Betätigungspedal für die Verwendung zur Ansteuerung von elektrischen Fahrzeugsystemen, beispielsweise eines Bremssystems vom Typ "Brake-by-wire", nicht geeignet.

Ein Betätigungspedal der eingangs genannten Gattung ist aus der DE 198 55 358 A1 bekannt. Der Encoderteil wird bei der vorbekannten Anordnung durch unterschiedliche Permanentmagnete gebildet, die auf einer mit dem Betätigungspedal verbundenen Kolbenstange radial gegenüberliegend in der Längsrichtung angeordnet sind. Die mit dem Encoderteil zusammenwirkenden Aufnehmer sind in der Wandung einer die Kolbenstange aufnehmenden Bohrung angeordnet. Als weniger vorteilhaft ist die kostenaufwändige Bearbeitung sowohl der Kolbenstange als auch der Bohrung anzusehen, in deren Wandung die Aufnehmer fixiert werden müssen. Außerdem ist die Messgenauigkeit der bekannten Anordnung durch die Länge des Betätigungsweges beschränkt. Als ein weiterer Nachteil kann die verhältnismäßig große axiale Baulänge angesehen werden, die insbesondere bei modernen Kraftfahrzeugen als störend empfunden wird.

Deshalb liegt der vorliegenden Erfindung die Aufgabe zugrunde, ein Betätigungspedal der eingangs genannten Gattung vorzuschlagen, das durch eine einfache Herstellung kostensparend herstellbar ist, besser in vorhandene Pedalanordnungen integrierbar ist und welches einen geringen Einbauraumbedarf aufgrund einer kompakten Bauweise aufweist und dessen Sensor eine höhere Messgenauigkeit liefert.

Diese Aufgabe wird erfindungsgemäß dadurch gelöst, dass der Encoderteil kreisförmig bzw. kreissegmentförmig ausgebildet und auf der Schwenkachse angeordnet ist, während die Aufnehmer an einem der Lagerung der Schwenkachse dienenden stationären Träger angebracht sind.

Zur Konkretisierung des Erfindungsgedankens weist der Encoderteil einen absolut messbaren ersten Bereich sowie einen hochauflösbaren zweiten Bereich auf, wobei der erste Aufnehmer als Absolutwerte erfassender Sensor und der zweite Aufnehmer als inkremental messender Sensor ausgeführt sind. Durch die Verwendung eines absolut messenden Sensors wird eine absolut unverlierbare Lageerkennung gewährleistet, die insbesondere bei der Ansteuerung von elektromechanisch betätigbaren Bremssystemen unverzichtbar ist.

Vorteilhafte Weiterbildungen des Erfindungsgegenstandes sind in den Ansprüchen 3 bis 14 aufgeführt.

Weitere Einzelheiten, Merkmale und Vorteile der Erfindung gehen aus der nachfolgenden Beschreibung von zwei Ausführungsbeispielen unter Bezugnahme auf die beiliegende schematische Zeichnung hervor. In der Zeichnung zeigt:
Fig. 1 eine erste Ausführung des erfindungsgemäßen Betätigungspedals in einer Seitenansicht,
Fig. 2 eine zweite Ausführung des erfindungsgemäßen Betätigungspedals in einer Seitenansicht und
Fig. 3 eine weitere Ausführung des Encoderteiles in schematischer Darstellung.

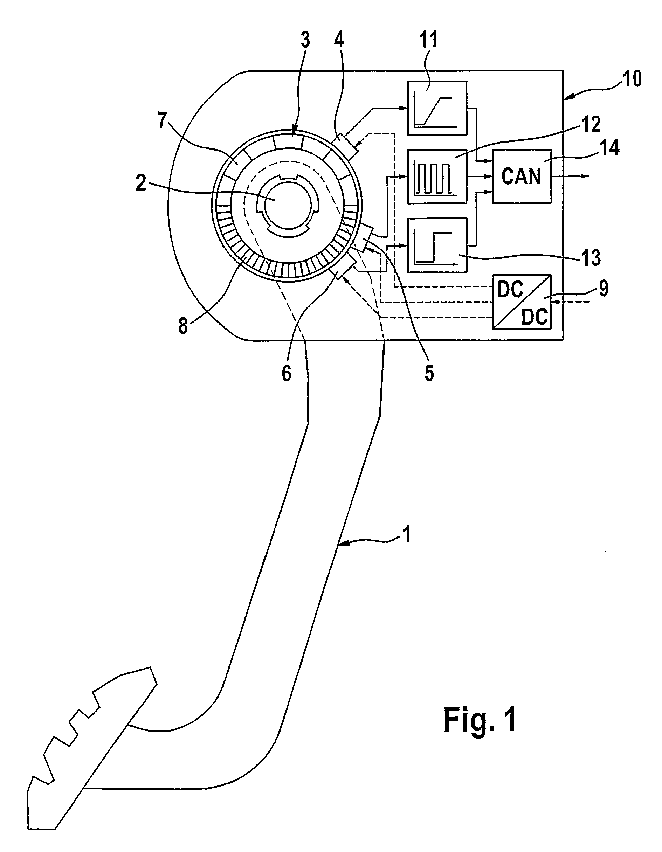

Das in Fig. 1 dargestellte Betätigungspedal 1 ist mittels einer Schwenkachse 2 in einem nicht gezeigten Träger im Fußraum eines Kraftfahrzeugs gelagert, wobei eine Sensoreinrichtung 10 zur Ermittlung der Stellung des Betätigungspedals 1 vorgesehen ist. Die Sensoreinrichtung 10 ist bei dem dargestellten Ausführungsbeispiel durch einen im Befestigungsbereich des Bremspedals 1 auf der Schwenkachse 2 angeordneten, mit dem Betätigungspedal 1 kinematisch gekoppelten, kreisförmigen Encoderteil 3, sowie drei magnetisch empfindliche Aufnehmer 4, 5 und 6 gebildet. Eine lediglich schematisch dargestellte Stromversorgungsschaltung für die Aufnehmer 4 - 6 ist mit dem Bezugszeichen 9 versehen. Die elektrischen Messgrössen der Aufnehmer 4 - 6 werden je einer Auswerteeinheit 11, 12, 13 zugeführt, wobei die Ausgangssignale der Auswerteeinheiten 11 - 13 in einem Busmodul 14 in ein busfähiges Signal umgewandelt werden. Der Encoderteil 3 weist einen ersten magnetischen Bereich 7 (Encoderspur) sowie einen zweiten magnetischen Bereich 8 auf, wobei der Polabstand (die Polbreite) des ersten Bereichs 7 dem maximalen Verstellbereich des Betätigungspedals 1 entspricht. Der zweite Bereich 8 ist durch mehrere, nebeneinander angeordnete Magnetsegmente gebildet, deren Polabstand im Vergleich mit dem des ersten Bereichs 7 wesentlich geringer ist. Der erste Aufnehmer 4, der als magnetoresistiver Sensor oder Hallsensor ausgeführt werden kann, führt eine Absolutmessung der Lage des Betätigungspedals 1 aus und ermöglicht durch den relativ großen Polabstand des ersten Bereichs 7 eine absolut unverlierbare Lageerkennung. Der zweite Aufnehmer 5, der ebenfalls als magnetoresistiver Sensor ausgeführt sein kann, führt eine inkrementale bzw. Relativmessung der Lage des Betätigungspedals 1 aus und kann aufgrund des großen Störabstandes seiner Ausgangssignale den zweiten Bereich 8 höher auflösen. Der dem zweiten Bereich 8 zugeordnete, ebenfalls als magnetoresistiver Sensor ausgeführte dritte Aufnehmer 6 findet insbesondere Verwendung bei Betätigungspedalen, die der Ansteuerung von elektrisch betätigbaren, sog. "Brake-by-wire"-Bremssystemen dienen, bei denen er eine Systemweckfunktion erfüllt. Die Auflösung des Wecksensors 6 ist jedoch weitaus grober als die des inkremental messenden Sensors 5. Dafür liegt sein Stromverbrauch weit unter 100 iA, so dass er konstant betrieben werden kann. Um eine hohe Genauigkeit des Messergebnisses der Sensoreinrichtung 10 zu gewährleisten ist es besonders vorteilhaft, wenn bei der Auswertung der elektrischen Messgrössen der Aufnehmer 4 - 6 in den elektronischen Auswerteeinheiten 11 - 13 die Ausgangssignale des ersten Aufnehmers 4 einer Signalkonditionierung und die Ausgangssignale des zweiten Aufnehmers 5 einer Interpolation unterworfen werden. Durch die letztgenannte Maßnahme wird die größtmögliche Auflösung des zweiten Bereichs 8 erreicht.

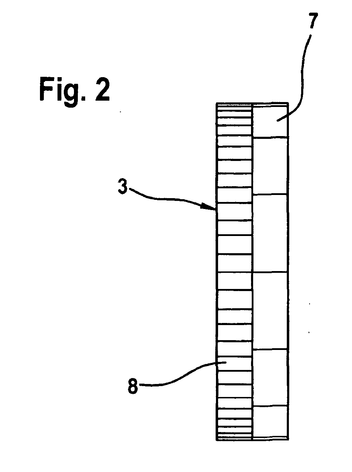

Bei der in Fig. 2 dargestellten zweiten Ausführung des Encoderteiles 3, ist der Encoderteil 3 streifenförmig ausgebildet. Die magnetischen Bereiche bzw. Encoderspuren 7, 8 sind nebeneinander angeordnet.

Im Rahmen der vorliegenden Erfindung sind auch zahlreiche Modifikationen denkbar. So ist beispielsweise eine Bremslichtschalterfunktion realisierbar. Hierzu wird der erste Schaltimpuls des dritten Aufnehmers 6 verwendet.

## Patentansprüche

1. Betätigungspedal (1) für Kraftfahrzeuge, das mittels einer Schwenkachse (2) drehbar gelagert ist und mit einer den Pedalweg aufnehmenden Sensoreinrichtung (10) versehen ist, wobei die Sensoreinrichtung (10) durch einen mit dem Betätigungspedal (1) gekoppelten Encoderteil (3) sowie mindestens zwei mit dem Encoderteil (3) zusammenwirkende, magnetisch empfindliche Aufnehmer (4,5,6) gebildet ist, **dadurch gekennzeichnet, dass** der Encoderteil (3) kreisförmig bzw. kreissegmentförmig ausgebildet und auf der Schwenkachse (2) angeordnet ist, während die Aufnehmer (4,5,6) an einem der Lagerung der Schwenkachse (2) dienenden stationären Träger angebracht sind.

2. Betätigungspedal nach Anspruch 1, **dadurch gekennzeichnet, dass** der Encoderteil (3) einen absolut messbaren ersten Bereich (7) sowie einen hochauflösbaren zweiten Bereich (8) aufweist, wobei der erste Aufnehmer (4) als ein Absolutwerte erfassender Sensor und der zweite Aufnehmer (5) als inkremental messender Sensor ausgeführt sind.

3. Betätigungspedal nach Anspruch 1 oder 2, **dadurch gekennzeichnet, dass** der Encoderteil (3) streifenförmig ausgebildet ist.

4. Betätigungspedal nach Anspruch 3, **dadurch gekennzeichnet, dass** die magnetischen Bereiche (7,8) des Encoderteiles (3) hintereinander angeordnet sind.

5. Betätigungspedal nach Anspruch 3, **dadurch gekennzeichnet, dass** die magnetischen Bereiche (7,8) des Encoderteiles (3) nebeneinander angeordnet sind.

6. Betätigungspedal nach einem der Ansprüche 1 bis 5, **dadurch gekennzeichnet, dass** die Aufnehmer (4,5,6) als magnetoresistive Aufnehmer ausgeführt sind.

7. Betätigungspedal nach einem der Ansprüche 1 bis 6, **dadurch gekennzeichnet, dass** der Encoderteil (3) mit dem Bremspedal (1) formschlüssig verbunden ist.

8. Betätigungspedal nach einem der Ansprüche 2 bis 7, **dadurch gekennzeichnet, dass** der erste Bereich (7) eine erste Polbreite aufweist, die dem maximal erreichbaren Pedalweg entspricht.

9. Betätigungspedal nach einem der Ansprüche 2 bis 8, **dadurch gekennzeichnet, dass** der zweite Bereich (8) eine zweite Polbreite aufweist, die wesentlich geringer als die erste Polbreite ist.

10. Betätigungspedal nach einem der Ansprüche 2 bis 9, **dadurch gekennzeichnet, dass** die elektrischen Messwerte des ersten Sensors (4) einer Signalkonditionierung unterzogen werden.

11. Betätigungspedal nach einem der Ansprüche 2 bis 10, **dadurch gekennzeichnet, dass** die elektrischen Messwerte des zweiten Sensors (5) einer Interpolation unterzogen werden.

12. Betätigungspedal nach einem der Ansprüche 1 bis 11, **dadurch gekennzeichnet, dass** es der Ansteuerung eines Bremssystems vom Typ "Brake-by-wire" dient und dass ein mit dem zweiten Bereich (8) zusammenwirkender dritter Aufnehmer (6) zur Aktivierung des Bremssystems vorgesehen ist.

13. Betätigungspedal nach einem der Ansprüche 1 bis 12, **dadurch gekennzeichnet, dass** der erste sowie der dritte Aufnehmer (4,6) als Hallsensoren ausgeführt sind.

14. Betätigungspedal nach Anspruch 13, **dadurch gekennzeichnet, dass** der dritte Aufnehmer (6) als Wiegand-Draht ausgeführt ist.

## Claims

1. Actuating pedal (1) for motor vehicles that is rotatably mounted by means of a pivot axis (2) and includes a sensor device (10) which picks up the pedal travel, with the sensor device (10) being comprised of an encoder member (3) coupled to the actuating pedal (1) and at least two magnetically sensitive sensing elements (4, 5, 6) cooperating with the encoder member (3),
**characterized in that** the encoder member (3) has a circular or circle-segment-shaped design and is arranged on the pivot axis (2), while the sensing elements (4, 5, 6) are mounted on a stationary carrier that is used for the mounting support of the pivot axis (2).

2. Actuating pedal as claimed in claim 1,
**characterized in that** the encoder member (3) includes an absolutely measurable first range (7) and a second range (8) of high resolution, wherein the first sensing element (4) is configured as a sensor that detects absolute values and the second sensing element (5) is configured as a sensor with incremental measurement.

3. Actuating pedal as claimed in claim 1 or 2,
**characterized in that** the encoder member (3) has a strip-shaped design.

4. Actuating pedal as claimed in claim 3,
**characterized in that** the magnetic ranges (7, 8) of the encoder member (3) are arranged one behind the other.

5. Actuating pedal as claimed in claim 3,
**characterized in that** the magnetic ranges (7, 8) of the encoder member (3) are arranged side by side.

6. Actuating pedal as claimed in any one of claims 1 to 5,
**characterized in that** the sensing elements (4, 5, 6) are configured as magnetoresistive sensing elements.

7. Actuating pedal as claimed in any one of claims 1 to 6,
**characterized in that** the encoder member (3) is positively engaged with the brake pedal (1).

8. Actuating pedal as claimed in any one of claims 2 to 7,
**characterized in that** the first range (7) has a first pole width corresponding to the maximally attainable pedal travel.

9. Actuating pedal as claimed in any one of claims 2 to 8,
**characterized in that** the second range (8) has a second pole width being considerably smaller than the first pole width.

10. Actuating pedal as claimed in any one of claims 2 to 9,
**characterized in that** the electric measured values of the first sensor (4) are subjected to a signal conditioning operation.

11. Actuating pedal as claimed in any one of claims 2 to 10,
**characterized in that** the electric measured values of the second sensor (5) are subjected to an interpolation.

12. Actuating pedal as claimed in any one of claims 1 to 11,
**characterized in that** it is used for the actuation of a brake system of the 'brake-by-wire' type, and **in that** a third sensing element (6) cooperating with the second range (8) is provided for the activation of the brake system.

13. Actuating pedal as claimed in any one of claims 1 to 12,
**characterized in that** the first and the third sensing element (4, 6) are designed as Hall sensors.

14. Actuating pedal as claimed in claim 13,
**characterized in that** the third sensing element (6) is configured as a Wiegand wire.

## Revendications

1. Pédale d'actionnement (1) pour véhicule automobile qui est montée tournante au moyen d'un axe de pivotement (2) et qui est pourvue d'un dispositif de détection (10) détectant la course de la pédale, le dispositif de détection (10) étant formé par un élément encodeur (3) couplé à la pédale d'actionnement (1) ainsi que par au moins deux capteurs (4, 5, 6) magnéto-sensibles coopérant avec l'élément encodeur (3), **caractérisée en ce que** l'élément encodeur (3) est de forme circulaire ou en forme de segment de cercle et disposé sur l'axe de pivotement (2), tandis que les capteurs (4, 5, 6) sont placés sur un support fixe servant à supporter l'axe de pivotement (2).

2. Pédale d'actionnement selon la revendication 1, **caractérisée en ce que** l'élément encodeur (3) présente une première zone (7) pouvant être mesurée de manière absolue ainsi qu'une deuxième zone (8) susceptible de haute résolution, le premier capteur (4) étant réalisé comme capteur détectant des valeurs absolues et le deuxième capteur (5) comme capteur mesurant de manière incrémentielle.

3. Pédale d'actionnement selon la revendication 1 ou 2, **caractérisée en ce que** l'élément encodeur (3) est réalisé en forme de bande.

4. Pédale d'actionnement selon la revendication 3, **caractérisée en ce que** les zones magnétiques (7, 8) de l'élément encodeur (3) sont disposées les unes derrière les autres.

5. Pédale d'actionnement selon la revendication 3, **caractérisée en ce que** les zones magnétiques (7, 8) de l'élément codeur (8) sont disposées côte à côte.

6. Pédale d'actionnement selon l'une des revendications 1 à 5, **caractérisée en ce que** les capteurs (4, 5, 6) sont réalisés comme capteurs magnétorésistifs.

7. Pédale d'actionnement selon l'une des revendications 1 à 6, **caractérisée en ce que** l'élément encodeur (3) est relié par complémentarité de formes à la pédale de frein (1).

8. Pédale d'actionnement selon l'une des revendications 2 à 7, **caractérisée en ce que** la première zone (7) présente une première largeur de pôle qui correspond à la course maximale possible de la pédale.

9. Pédale d'actionnement selon l'une des revendications 2 à 8, **caractérisée en ce que** la deuxième zone (8) présente une deuxième largeur de pôle qui est sensiblement inférieure à la première largeur de pôle.

10. Pédale d'actionnement selon l'une des revendications 2 à 9, **caractérisée en ce que** les valeurs de mesure électriques du premier capteur (4) sont soumises à un conditionnement des signaux.

11. Pédale d'actionnement selon l'une des revendications 2 à 10, **caractérisée en ce que** les valeurs de mesure électriques du deuxième capteur (5) sont soumises à une interpolation.

12. Pédale d'actionnement selon l'une des revendications 1 à 11, **caractérisée en ce qu'**elle sert à la commande d'un système de freinage de type "brake-by-wire" et **en ce qu'**un troisième capteur (6), coopérant avec la deuxième zone (8), est prévu pour l'activation du système de freinage.

13. Pédale d'actionnement selon l'une des revendications 1 à 12, **caractérisée en ce que** le premier ainsi que le troisième capteur (4, 6) sont réalisés comme des capteurs de Hall.

14. Pédale d'actionnement selon la revendication 13, **caractérisée en ce que** le troisième capteur (6) est réalisé comme fil de Wiegand.
